# FASCICULE DE BREVET EUROPEEN

(11) **EP 2 732 617 B1**
(45) Date de publication et mention de la délivrance du brevet: **06.03.2019**
(21) Numéro de dépôt: 12733708.7
(22) Date de dépôt: 09.07.2012
(51) Int. Cl.: H04N 5/361, H04N 5/232

(54) **PROCÉDÉ DE COMMANDE D'UN DÉTECTEUR PHOTOSENSIBLE PAR DÉTECTION AUTOMATIQUE D'UN RAYONNEMENT INCIDENT**
VERFAHREN ZUR STEUERUNG EINES PHOTOSENSORS DURCH AUTOMATISCHE MESSUNG DES EINFALLENDEN LICHTS
METHOD FOR CONTROLLING A PHOTOELECTRIC DETECTOR BY AUTOMATICALLY DETECTING THE INCOMING LIGHT

(30) Priorité: 13.07.2011 FR 1156419
(43) Date de publication de la demande: 21.05.2014
(73) Titulaire: Trixell, 38430 Moirans (FR)
(72) Inventeur: BLANCHON, David, F-38800 Saint Paul De Varces (FR); COUDER, David, F-38000 Grenoble (FR); CANDIARD, Benoît, F-38340 Voreppe (FR)
(74) Mandataire: Collet, Alain
(86) Numéro de dépôt international: PCT/EP2012/063416
(87) Numéro de publication internationale: WO 2013/007695

(56) Documents cités:
- EP-A1- 0 757 474
- EP-A2- 1 401 193
- FR-A1- 2 796 239
- US-A1- 2003 194 058

## Description

L'invention concerne un procédé de commande d'un dispositif photosensible, par exemple d'un détecteur numérique de rayons X comprenant une matrice de points photosensibles. En particulier, elle concerne un procédé de commande de la lecture de charges électriques accumulées dans les points photosensibles du dispositif. L'invention s'applique également à la détermination d'une quantité de photons reçue par le dispositif photosensible.

Les techniques de dépôt en films minces de matériaux semi-conducteurs, tels que le silicium amorphe hydrogéné, sur des supports isolants, par exemple en verre, permettent de réaliser des dispositifs photosensibles formés d'une matrice de points sensibles au rayonnement visible ou proche du visible. Ces dispositifs photosensibles sont appelés détecteurs à l'état solide, détecteurs à semi-conducteurs ou encore détecteurs à panneaux plats. Ils peuvent être utilisés dans le cadre de la formation d'images radiologiques par rayons X en interposant un scintillateur entre le rayonnement X et la matrice de points photosensibles, de manière à convertir le rayonnement X en rayonnement lumineux dans la bande de longueurs d'onde des points photosensibles. Chaque point photosensible est en général au moins constitué d'un élément photosensible tel qu'une diode et d'un élément interrupteur en série, par exemple un transistor à effet de champ. Chaque point photosensible est connecté entre un conducteur colonne et un conducteur ligne. Durant une phase dite de prise d'image, les éléments photosensibles sont exposés à un rayonnement qu'ils convertissent en charges électriques. Durant une phase dite de lecture, une impulsion de lecture est successivement appliquée aux éléments interrupteurs par les conducteurs ligne afin de transférer les charges électriques vers des circuits de lecture par l'intermédiaire des conducteurs colonne.

Le document EP 1 401 193 décrit un procédé de déclenchement d'un enregistrement d'image au moyen d'au moins un système de caméra, dans lequel une zone partielle d'une surface d'enregistrement d'image du système de caméra est soumise à l'action d'une source de rayonnement dans un état sans enregistrement. Le signal ainsi obtenu à partir de la surface d'enregistrement d'image est fourni à un dispositif d'évaluation et est évalué comme un signal de non-enregistrement. L'enregistrement d'image est déclenché automatiquement lors d'un changement de ce signal. Le document EP 0 757 474 décrit un dispositif imageur comprenant des moyens pour déclencher l'acquisition d'image après un test de seuil sur un signal lu en continu pendant la période d'attente, nécessitant donc une lecture rapide en continu du signal présent dans tous les éléments photosensibles.

Plus précisément, le document EP 0 757 474 divulge un procédé de commande d'un dispositif photosensible, susceptible d'être exposé à un flux de photons, issu d'une source de photons ou de rayons X, pendant une durée d'émission limitée, comprenant des points photosensibles, et comprenant un élément photosensible apte à convertir un flux de photons en charges électriques, le procédé comportant les étapes suivantes : déterminer le potentiel électrique, déterminer une différence du potentiel électrique entre les premier et deuxième instants, comparer la différence de potentiel électrique à un seuil prédéterminé, l'étape consistant à déterminer le potentiel électrique étant répétée périodiquement tant que la différence de potentiel entre les deux derniers instants de détermination n'est pas supérieure au seuil prédéterminé, et si la différence de potentiel électrique est supérieure au seuil prédéterminé, commander de façon à déclencher la lecture des charges électriques en cas d'évolution significative du potentiel électrique, et en ce que la durée de la période entre deux déterminations successives du potentiel sur un conducteur colonne est inférieure à une durée minimale pendant laquelle le dispositif photosensible est susceptible d'être exposé à un flux de photons. Le document FR 2 796 239 décrit le cycle de maintien, le cycle de lecture et le cycle de remise à niveau de l'imageur, l'ensemble de ces cycles étant déclenchés par une commande externe à l'imageur, l'imageur étant donc totalement passif et ne comportant pas de dispositif de déclenchement ou de détection des rayons X pouvant provoquer ce déclenchement.

Pour la radiologie médicale, des dispositifs photosensibles ont été réalisés sous forme de cassettes utilisées en association avec une station de base comprenant une source de rayonnement X. Les cassettes peuvent être mobiles afin d'être facilement placées à proximité d'un patient dont on souhaite obtenir une image radiologique. Les détecteurs à l'état solide présentent de nombreux avantages par rapport aux films radiologiques, notamment en termes d'exploitation des images. Cependant, une synchronisation est généralement nécessaire entre la station de base et la cassette pour synchroniser la fenêtre d'acquisition, c'est-à-dire l'intervalle de temps pendant lequel le détecteur à l'état solide est apte à convertir les photons reçus, avec la fenêtre de rayonnement, c'est-à-dire l'intervalle de temps pendant lequel des rayons X sont émis par la station de base. En effet, en l'absence de synchronisation, la fenêtre de rayonnement peut débuter avant la fenêtre d'acquisition ou se terminer après. Le patient est alors soumis inutilement à une dose de rayons X. En outre, l'exposition des points photosensibles à un rayonnement pendant la phase de lecture dégrade la qualité de l'image radiologique. Ainsi, la synchronisation permet de s'assurer que l'intégralité de la fenêtre de rayonnement est incluse dans la fenêtre d'acquisition, l'intégralité du rayonnement X émis par une station de base pouvant alors être traitée par la cassette mobile. La synchronisation impose donc la présence de moyens de liaison entre la station de base et la cassette. Or les stations de base prévues à l'origine pour fonctionner avec des cassettes à films radiologiques ne comportent pas de tels moyens de liaison. Le remplacement d'une cassette à films radiologiques par une cassette comprenant un détecteur à l'état solide impose par conséquent des modifications structurelles de la station de base. Ces modifications structurelles entraînent une complexification du système radiologique et un surcoût d'installation. De plus, les moyens de liaison présentent des inconvénients. En particulier, un moyen de liaison filaire restreint la mobilité d'une cassette mobile. Une liaison sans fil permet plus de mobilité mais ne permet en général pas de synchronisation. Tel est notamment le cas des liaisons sans fil basées sur la norme IEEE 802.11. En outre, les contraintes de compatibilité électromagnétique dans le domaine médical imposent de très faibles puissances d'émission. Il se pose alors des problèmes de fiabilité de la liaison sans fil.

Un but de l'invention est notamment de remédier à tout ou partie des inconvénients précités en permettant à un dispositif photosensible de traiter l'ensemble d'un rayonnement reçu sans nécessiter de moyens de liaison avec la source du rayonnement. L'invention permet notamment de détecter l'arrivée de photons sur le dispositif photosensible sans nécessiter de capteur additionnel et sans engager de phase de lecture, c'est-à-dire sans appliquer d'impulsion de lecture aux éléments interrupteurs des éléments photosensibles.

L'invention est définie dans les revendications annexées.

L'invention a notamment pour avantage qu'elle permet de remplacer tout type de cassette mobile dans un système radiologique sans nécessiter de modification structurelle.

L'invention sera mieux comprise et d'autres avantages apparaîtront à la lecture de la description qui va suivre, faite en regard de dessins annexés sur lesquels :
- la figure 1 représente un exemple de dispositif photosensible auquel peut s'appliquer le procédé de commande selon l'invention ;
- la figure 2 représente les étapes principales du procédé de commande selon l'invention ;
- la figure 3 représente des étapes du procédé de commande selon une première forme particulière de réalisation de l'invention dans laquelle un potentiel électrique est lu périodiquement tant qu'il n'a pas évolué significativement ;
- la figure 4 représente un exemple d'enchaînement temporel des étapes du procédé de commande selon la première forme particulière de réalisation de l'invention ;
- la figure 5 représente des étapes du procédé de commande selon une deuxième forme particulière de réalisation de l'invention dans laquelle le potentiel électrique est lu plusieurs fois sur plusieurs conducteurs colonne ;
- la figure 6 représente un exemple d'image test obtenue par le procédé de commande selon la deuxième forme particulière de réalisation de l'invention, ladite image étant découpée en blocs ;
- la figure 7 illustre le principe d'une détection pyramidale selon la deuxième forme particulière de réalisation de l'invention ;
- la figure 8 représente graphiquement un exemple de probabilité d'occurrence de moyennes d'un bloc correspondant à une zone non exposée du dispositif photosensible de la figure 1 ;
- la figure 9 représente graphiquement un exemple de probabilité d'occurrence des moyennes d'un bloc correspondant à une zone exposée du dispositif photosensible ;
- la figure 10 représente graphiquement un exemple de taux de non-détection en fonction de la moyenne d'un bloc ;
- la figure 11 représente graphiquement la relation entre une dimension d'un bloc et une moyenne minimale de ce bloc pouvant être détectée avec un taux de non-détection donné ;
- la figure 12 représente graphiquement la relation entre la dimension d'un bloc et la moyenne de ce bloc pour une exposition sur une surface donnée du dispositif photosensible ;
- la figure 13 regroupe dans un même graphique les graphiques des figures 11 et 12 ;
- la figure 14 illustre l'effet d'une variation de la dimension des blocs sur la détection d'une exposition du dispositif photosensible.

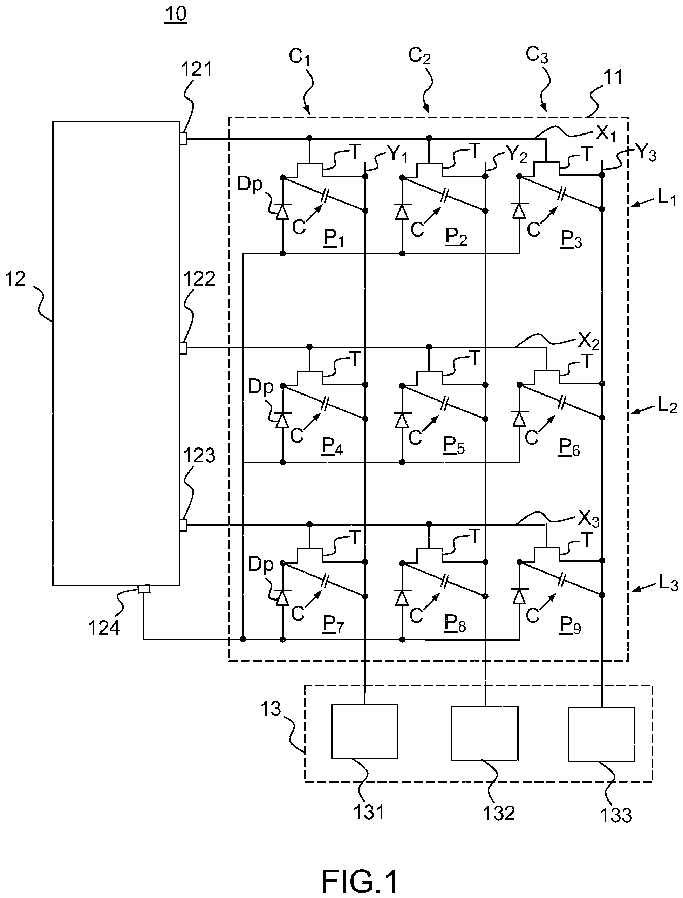

La figure 1 représente un exemple de dispositif photosensible 10 auquel peut s'appliquer le procédé de commande selon l'invention. Le dispositif photosensible 10 comprend une matrice 11 de points photosensibles, un circuit de commande lignes 12 et un ensemble 13 de circuits de lecture de charges 131, 132 et 133. Dans l'exemple de la figure 1, la matrice 11 est formée de trois lignes L₁ à L₃ par trois colonnes C₁ à C₃ de points photosensibles, référencés P₁ à P₉ individuellement, et Pₚ génériquement. Une telle matrice peut bien entendu être formée d'un plus grand nombre de points photosensibles, pouvant aller jusqu'à plusieurs millions de points. Par ailleurs, les points photosensibles peuvent également être disposés selon une unique colonne de manière à former une barrette de détection. Chaque point photosensible Pₚ comprend une diode photosensible Dp et un transistor à effet de champ (FET) T. Les diodes photosensibles pourraient être remplacées par tout élément photosensible capable de convertir un rayonnement lumineux en charges électriques, par exemple un phototransistor. Par ailleurs, un scintillateur peut être placé entre une source de rayonnement X et la matrice 11 afin de réaliser une image à rayons X. Les transistors T sont par exemple des transistors à couches minces, mieux connus sous la dénomination anglo-saxonne de "Thin Film Transistors" (TFT). Le dispositif photosensible 10 comprend en outre des conducteurs ligne X₁ à X₃ reliant respectivement des sorties 121 à 123 du circuit de commande lignes 12 aux grilles des transistors T de la première ligne L₁ de points photosensibles P₁ à P₃, aux grilles des transistors T de la deuxième ligne L₂ de points photosensibles P₄ à P₆, et aux grilles des transistors T de la troisième ligne L₃ de points photosensibles P₇ à P₉. Le dispositif photosensible 10 comprend également des conducteurs colonne Y₁ à Y₃. Le conducteur colonne Y₁ relie les drains des transistors T de la première colonne C₁ de points photosensibles P₁, P₄ et P₇ au circuit de lecture de charges 131. Le conducteur colonne Y₂ relie les drains des transistors T de la deuxième colonne C₂ de points photosensibles P₂, P₅ et P₈ au circuit de lecture de charges 132. Le conducteur colonne Y₃ relie les drains des transistors T de la troisième colonne C₃ de points photosensibles P₃, P₆ et P₉ au circuit de lecture de charges 133. Dans chaque point photosensible Pₚ, la source du transistor T est connectée à la cathode de la diode photosensible Dp. Les anodes de toutes les photodiodes Dp sont reliées à une sortie 124 du circuit de commande lignes 12. La sortie 124 délivre une tension de polarisation Vₚₒₗₐᵣ, négative par rapport au potentiel de référence du dispositif photosensible 10. La tension Vₚₒₗₐᵣ est par exemple de l'ordre de - 7 V.

Le dispositif photosensible 10 de la figure 1 fonctionne de la manière suivante. Dans une phase d'acquisition d'une image, la matrice 11 est exposée à un flux de photons. Les photons sont convertis en charges électriques au niveau de chaque point photosensible Pₚ par la photodiode Dp. La quantité de charges électriques est proportionnelle au nombre de photons reçus par la photodiode Dp. Les transistors T sont à l'état bloqué, de sorte que les charges électriques s'accumulent dans chaque point photosensible Pₚ au point de connexion entre la photodiode Dp et le transistor T. Il en résulte une baisse de potentiel de ce point de connexion, appelé "point flottant". Les charges électriques accumulées dans chaque point photosensible doivent ensuite être lues afin de pouvoir restituer une image en deux dimensions du flux de photon reçus par la matrice 11. La lecture des charges électriques des points photosensibles Pₚ s'effectue ligne par ligne, simultanément pour tous les points photosensibles d'une même ligne. A cet effet, dans une phase de lecture, le circuit de commande lignes 12 applique à chaque conducteur ligne X₁-X₃ adressé une impulsion de lecture faisant passer les transistors T de la ligne adressée à l'état passant. Les points flottants de la ligne adressée retrouvent alors leur potentiel de polarisation, ce qui fait circuler dans chaque conducteur colonne Y₁ à Y₃ un courant proportionnel à la quantité de charges accumulées au point flottant correspondant. Les circuits de lecture de charges 131 à 133 exploitent ces courants afin de déterminer la quantité de photons reçue par chaque point photosensible Pₚ de la ligne adressée.

L'invention repose sur une propriété intrinsèque des transistors, à savoir la présence d'une capacité de couplage parasite existant naturellement à l'état bloqué entre le drain et la source d'un transistor à effet de champ, de même qu'entre le collecteur et l'émetteur d'un transistor bipolaire. Cette capacité de couplage parasite est relativement faible, par exemple de l'ordre de 10 femtofarad (10⁻¹⁵ farad), mais néanmoins suffisante pour engendrer une variation du potentiel des conducteurs colonne. Par effet de couplage capacitif, une variation de potentiel du point flottant de chaque point photosensible Pₚ connecté à un conducteur colonne Y₁-Y₃ entraîne une variation proportionnelle du potentiel de ce conducteur colonne Y₁-Y₃. Ainsi, la variation du potentiel d'un conducteur colonne Y₁-Y₃ est proportionnelle à la somme des variations de potentiel du point flottant de tous les points photosensibles Pₚ connectés à ce conducteur colonne Y₁-Y₃. Sur la figure 1, la capacité de couplage parasite de chaque transistor T est représentée par un condensateur C dont une première électrode est connectée au point flottant (point de connexion entre une photodiode Dp et le transistor T associé) du point photosensible Pₚ considéré et dont une deuxième électrode est connectée au conducteur colonne Y₁-Y₃ auquel est relié le point photosensible Pₚ. Il est noté que cette capacité de couplage parasite pourrait être renforcée par la présence d'un condensateur connecté en parallèle, c'est-à-dire entre le drain et la source de chaque transistor T.

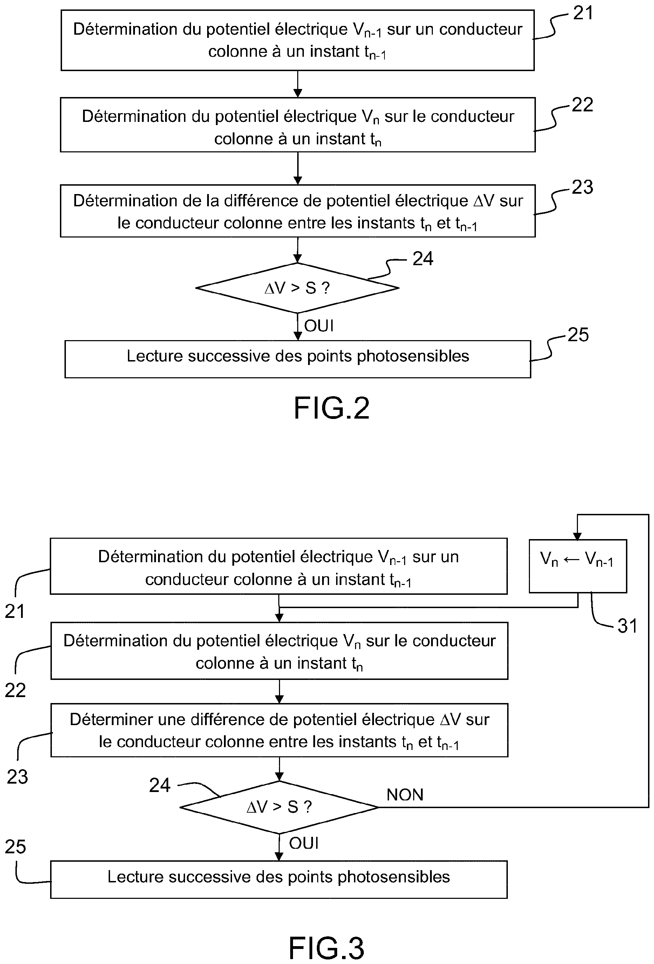

La figure 2 représente des étapes possibles du procédé de commande faisant l'objet de l'invention. Ce procédé s'applique par exemple au dispositif photosensible 10 de la figure 1. Dans une première étape 21, un premier test est effectué : le potentiel électrique Vₙ₋₁ de l'un des conducteurs colonne Y₁ à Y₃ est déterminé à un premier instant tₙ₋₁. Dans une deuxième étape 22, un deuxième test est effectué : le potentiel électrique Vₙ du même conducteur colonne Y₁-Y₃ est déterminé à un deuxième instant tₙ. Un test, c'est-à-dire la détermination du potentiel électrique d'un conducteur colonne Y₁-Y₃, est effectué au moyen du circuit de lecture de charges 131-133 associé au conducteur colonne Y₁-Y₃ considéré. Les charges électriques présentes sur le conducteur colonne sont lues et converties en une valeur numérique représentative du potentiel électrique du conducteur colonne. Dans une troisième étape 23, la différence de potentiel électrique ΔV (Vₙ - Vₙ₋₁) du conducteur colonne Y₁-Y₃ entre les instants tₙ et tₙ₋₁ est déterminée. Dans une quatrième étape 24, cette différence de potentiel ΔV est comparée à un seuil S prédéterminé. En fonction du résultat de cette comparaison, une étape de lecture 25 est déclenchée ou non. En particulier, si la différence de potentiel ΔV est supérieure au seuil S, une phase de lecture est exécutée, les lignes L₁ à L₃ de points photosensibles Pₚ étant lues successivement par application d'une impulsion de lecture sur chacun des conducteurs ligne X₁ à X₃. La détermination du seuil S résulte d'un compromis entre deux exigences antagonistes. Selon une première exigence, le seuil S ne doit pas être trop faible afin d'éviter l'exécution d'une phase de lecture alors que la matrice 11 n'a pas été exposée à un flux de photons. En effet, même en l'absence d'exposition, une différence de potentiel d'un conducteur colonne Y₁-Y₃ peut être observée en raison du bruit introduit par les différents composants électroniques, notamment par le circuit de lecture de charges 131-133 lors de la détermination du potentiel. A l'inverse, le seuil S ne doit pas être trop élevé afin d'éviter de manquer une phase d'acquisition d'une image.

La figure 3 représente une forme particulière de réalisation de l'invention permettant de vérifier en permanence l'arrivée de photons sur la matrice 11 du dispositif photosensible 10. Le dispositif photosensible 10 est dans un mode veille, c'est-à-dire que des tests sont effectués à des intervalles de temps réguliers. La durée Tᵥ de chaque intervalle de temps est par exemple de l'ordre de quelques millisecondes ou quelques dizaines de millisecondes. Cette durée Tᵥ peut être fixée de manière à être inférieure à la durée minimale d'exposition, c'est-à-dire la durée minimale pendant laquelle le dispositif photosensible 10 est susceptible d'être exposé à un flux de photons. Une telle condition est par exemple nécessaire lorsque, pendant la phase d'acquisition, les circuits de lecture de charge font dériver lentement le potentiel électrique sur le conducteur colonne auquel ils sont connectés. Il est alors nécessaire de comparer le potentiel électrique sur un conducteur colonne entre un instant où le dispositif photosensible 10 n'est pas exposé à un flux de photons, et un instant où il est effectivement exposé à un flux de photons. La différence de potentiel ΔV déterminée lors de l'étape 23 est la différence entre le potentiel électrique Vₙ d'un conducteur colonne Y₁-Y₃ déterminé lors du dernier test à l'instant tₙ et le potentiel Vₙ₋₁ déterminé lors de l'avant-dernier test à l'instant tₙ₋₁. Sur la figure 3, la répétition des tests est réalisée par une boucle comprenant les étapes 22, 23 et 24, ainsi qu'une étape supplémentaire 31 fermant la boucle. L'étape 31 est effectuée à l'issue de l'étape 24 si la différence de potentiel ΔV n'est pas supérieure au seuil S. Dans cette étape 31, le potentiel Vₙ devient le potentiel Vₙ₋₁. A l'issue de l'étape 31, une nouvelle étape 22 de test est effectuée dans laquelle un nouveau potentiel Vₙ est déterminé. Ainsi, ce potentiel Vₙ peut être comparé dans l'étape 23 au nouveau potentiel Vₙ₋₁ déterminé lors de la précédente étape 22.

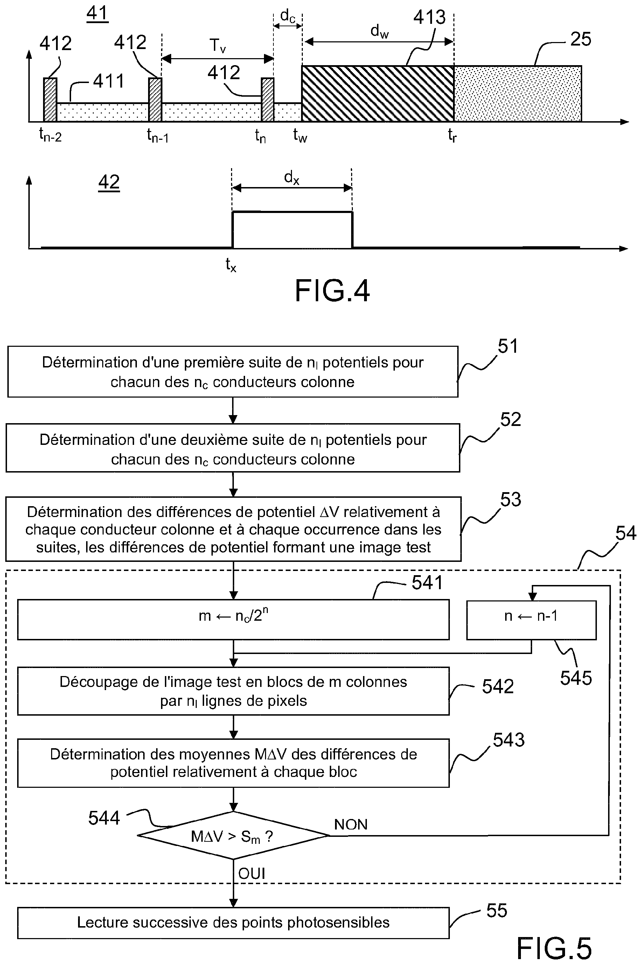

La figure 4 représente, par deux chronogrammes, l'enchaînement temporel des différentes étapes du procédé de commande. Un premier chronogramme 41 représente le fonctionnement du dispositif photosensible 10. Un deuxième chronogramme 42 représente le fonctionnement de la source de photons ou de rayons X. Le dispositif photosensible 10 est dans le mode veille 411 entre des instants tₙ₋₂ et t_{w}. Pendant ce mode veille 411, des tests 412 sont exécutés à différents instants tₙ₋₂, tₙ₋₁ et tₙ. La durée Tᵥ sépare les tests successifs. Après chaque test 412, la différence de potentiel ΔV entre les deux derniers tests est déterminée et comparée au seuil S. En l'occurrence, après l'instant tₙ₋₁, la différence de potentiel ΔV est insuffisante pour déclencher une phase de lecture. Un nouveau test est alors effectué à l'instant tₙ. A un instant tₓ, précédant l'instant tₙ, un flux de photons ou de rayons X commence à être émis par la source en direction du dispositif photosensible 10. La durée d'émission est notée dₓ. Ainsi, lors de l'étape 24 suivant le test 412 à l'instant tₙ, il est déterminé que la différence de potentiel ΔV est supérieure au seuil S. Une étape 25 de lecture doit donc être déclenchée. Au préalable, une étape d'attente 413 est effectuée à partir de l'instant t_{w}. Cet instant t_{w} se produit une durée d_{c} après l'instant tₙ, la durée d_{c} étant la durée de traitement des étapes 23 et 24. L'étape d'attente 413 est effectuée pendant une durée d_{w}, jusqu'à un instant tᵣ. Elle permet de s'assurer que l'émission de photons ou de rayons X est terminée au moment de la phase de lecture. En effet, la lecture des points photosensibles pendant leur exposition donnerait une image très dégradée. En outre, dans le cas d'une imagerie X, seulement une partie du rayonnement X reçu par le patient serait exploitée. La durée d_{w} doit donc être supérieure à la durée maximale d'exposition, c'est-à-dire la durée maximale pendant laquelle le dispositif photosensible 10 est susceptible d'être exposé à un flux de photons. A l'issue de l'étape d'attente 413, l'étape de lecture 25 peut être exécutée.

Dans le but de réduire l'impact du bruit électronique introduit par les composants du dispositif photosensible 10, le procédé selon l'invention peut être optimisé de différentes manières. Dans une première variante, il est tenu compte de la différence de potentiel de plusieurs - voire de tous les - conducteurs colonne Y₁-Y₃, et non uniquement l'un d'entre eux. A cet effet, les étapes 21 à 23 peuvent être réalisées pour chaque conducteur colonne Y₁ à Y₃. L'étape 24 peut par exemple consister à comparer la somme des différences de potentiel sur l'ensemble des conducteurs colonne Y₁ à Y₃ avec un seuil global. Elle peut aussi consister à comparer individuellement la différence de potentiel des conducteurs colonne à un seuil, une phase de lecture n'étant exécutée que si le nombre de comparaisons positives, c'est-à-dire le nombre de différences de potentiel supérieures au seuil, est supérieur à un nombre donné. Les conducteurs colonne considérés peuvent être adjacents ou non. Dans une deuxième variante de réduction de l'impact du bruit électronique, le potentiel du ou des conducteurs colonne Y₁-Y₃ est déterminé plusieurs fois successivement pour un même test. Une valeur moyenne du potentiel est ensuite déterminée pour chaque conducteur colonne Y₁-Y₃ considéré. La différence de potentiel ΔV déterminée lors de l'étape 23 est alors la différence entre la valeur moyenne du potentiel électrique Vₙ déterminé lors du dernier test à l'instant tₙ et la valeur moyenne du potentiel électrique Vₙ₋₁ déterminé lors de l'avant-dernier test à l'instant tₙ₋₁.

Le procédé de commande selon l'invention permet à un dispositif photosensible comprenant une matrice de points photosensibles de se synchroniser de manière autonome, indépendamment de la source de photons ou de rayons X. Dans le domaine de l'imagerie médicale, où les dispositifs photosensibles peuvent être intégrés dans des cassettes mobiles, il devient possible de remplacer n'importe quel dispositif photosensible, notamment les cassettes à films radiologiques ou les cassettes comprenant des moyens de synchronisation avec la source de rayonnement X, sans modifier l'interface du système. En outre, le procédé de commande ne nécessite pas d'ajouter de composants matériels au dispositif photosensible ou à la source de photons ou de rayons X. Contrairement aux solutions ou un dispositif à chambre d'ionisation est placé dans le plan d'entrée du dispositif photosensible, le procédé de commande selon l'invention ne dégrade pas la qualité du signal qui arrive sur la matrice.

La figure 5 représente une forme particulière de réalisation du procédé de commande selon l'invention. Cette forme de réalisation s'applique à des dispositifs photosensibles comprenant plusieurs conducteurs colonnes. Elle s'appuie d'une part sur la prise en compte du potentiel électrique sur tous les conducteurs colonne et, d'autre part, sur une détermination répétée de ces potentiels électriques pour un même test. Pour la suite de la description, on considère un dispositif photosensible comprenant n_{c} conducteurs colonnes, c'est-à-dire n_{c} colonnes de points photosensibles Pₚ.

Dans une première étape 51, le potentiel électrique est déterminé nₗ fois successivement sur chacun des n_{c} conducteurs colonne. Ces nₗ x n_{c} potentiels sont déterminés dans un premier intervalle de temps durant une phase d'acquisition, c'est-à-dire dans un intervalle de temps où les transistors T du dispositif photosensible sont commandés à l'état bloqué. Ces potentiels forment, pour chaque conducteur colonne, une première suite de potentiels. Ils sont notés V_{1,i,j} où 1 désigne la première suite de potentiels, i est un entier compris entre 1 et nₗ et désigne l'occurrence dans la première suite, et j est un entier compris entre 1 et n_{c} et désigne l'un des conducteurs colonne.

Dans une deuxième étape 52, le potentiel électrique est à nouveau déterminé nₗ fois successivement sur chacun des n_{c} conducteurs colonne. Ces nₗ x n_{c} potentiels sont déterminés dans un deuxième intervalle de temps, toujours durant la phase d'acquisition. Ils forment, pour chaque conducteur colonne, une deuxième suite de potentiels. Les potentiels de la première et de la deuxième suite sont notés respectivement V_{1,i,j} et V_{2,1,j}, où i est un entier compris entre 1 et nₗ et désigne l'occurrence dans la suite considérée, et j est un entier compris entre 1 et n_{c} et désigne l'un des conducteurs colonne.

Dans une troisième étape 53, des différences de potentiels ΔV_{i,j} entre les potentiels électriques V_{1,i,j} de la première suite et les potentiels électriques V_{2,i,j} correspondants de la deuxième suite sont déterminées. Une différence de potentiel est déterminée relativement à chaque conducteur colonne j et à chaque occurrence i dans les suites de potentiels. En particulier, pour chaque conducteur colonne, une différence ΔV_{1,j} est déterminée entre le premier potentiel V_{1,1,j} de la première suite et le premier potentiel V_{2,1,j} de la deuxième suite, entre le deuxième potentiel V_{1,2,j} de la première suite et le deuxième potentiel V_{2,2,j} de la deuxième suite, et ainsi de suite pour toutes les occurrences i des deux suites de potentiels. Toutes ces différences de potentiels peuvent être représentées sous forme d'une image test de n_{c} colonnes par nₗ lignes de pixels, chaque ligne de l'image test correspondant à une occurrence i dans les suites de potentiels, les colonnes correspondant aux conducteurs colonne j du dispositif photosensible. La valeur de chaque pixel de l'image test est égale à la différence de potentiel ΔV_{i,j} pour l'occurrence i et le conducteur colonne j considérés.

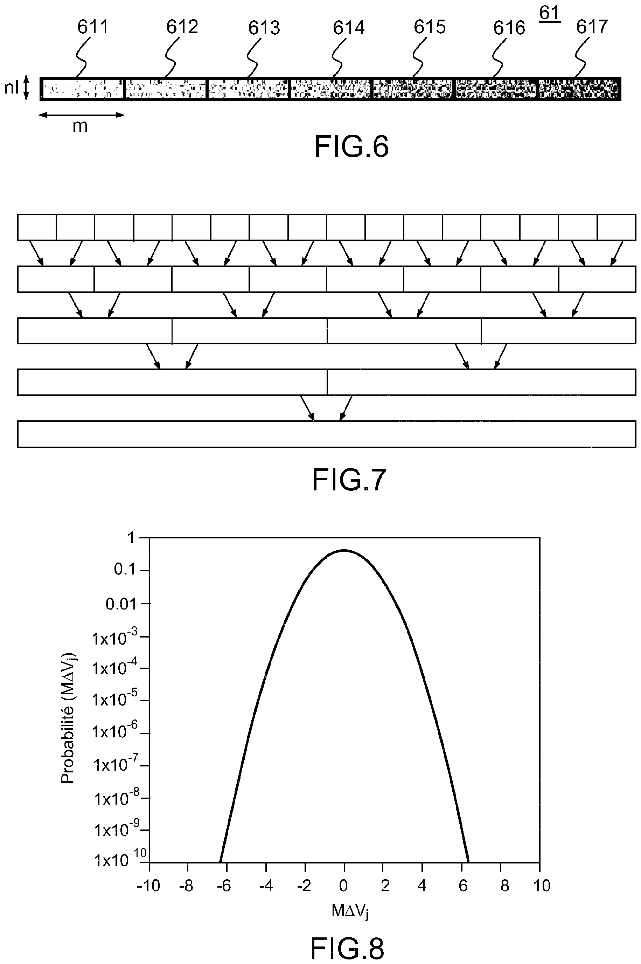

Dans une quatrième étape 54, l'exposition des points photosensibles est testée. Cette étape 54 comprend les sous-étapes suivantes. Dans une première sous-étape 541, une variable m est initialisée à une valeur entière prédéterminée. Les dispositifs photosensibles comprennent généralement un nombre de colonnes égal à une puissance de deux. La variable m est alors avantageusement fixée par la relation m = n_{c}/2ⁿ, où n est un entier supérieur ou égal à 1. La valeur de l'entier n est discutée ci-après. Dans une deuxième sous-étape 542, l'image test est découpée en blocs de nₗ lignes par m colonnes de pixels. La variable m définit ainsi une dimension des blocs. La figure 6 représente un exemple d'image test 61 découpée en 7 blocs notés 611 à 617. Dans une troisième sous-étape 543, une moyenne MΔVⱼ des différences de potentiels ΔV_{i,j} est déterminée pour chaque bloc. Dans une quatrième sous-étape 544, chaque moyenne MΔVⱼ est comparée à un seuil prédéterminé Sₘ. Ce seuil Sₘ est déterminé en fonction de la dimension m. Si aucune des moyenne MΔVⱼ n'est supérieure au seuil Sₘ, l'étape 54 est répétée avec une dimension m supérieure à la dimension m considérée précédemment. L'augmentation de la dimension m est représentée par une sous-étape 545 effectuée à la place de la sous-étape 541 d'initialisation de la dimension m. Lorsque la dimension m est fixée par la relation m = n_{c}/2ⁿ, la dimension m des blocs peut être augmentée en diminuant la valeur de l'entier n, par exemple d'une unité. On peut alors parler de détection pyramidale, la dimension m des blocs étant doublée à chaque sous-étape 545. La figure 7 illustre le principe de la détection pyramidale. L'avantage de cette détection est que la moyenne MΔVⱼ de chaque bloc d'un niveau donné peut être obtenue par la moyenne des deux blocs du niveau précédent. Si, lors de la sous-étape 544, au moins l'une des moyennes MΔVⱼ est supérieure au seuil Sₘ, une étape de lecture 55 est déclenchée. Cette étape 55 consiste, comme précédemment, à lire successivement les différentes lignes de points photosensibles Pₚ par application d'une impulsion de lecture sur chacun des conducteurs ligne.

La suite de la description illustre l'impact de la dimension m sur le taux de fausse alarme et sur le taux de non-détection. Par fausse alarme, on entend le fait qu'une étape de lecture 55 est déclenchée alors que le dispositif photosensible n'a pas été exposé. Par non-détection, on entend le fait qu'une étape de lecture 55 n'est pas déclenchée alors que le dispositif photosensible a été exposé. On considère que chaque pixel de l'image test, c'est-à-dire chaque colonne du dispositif photosensible, est soumis à un bruit électronique d'écart-type s, par exemple égal à 8,2 lsb, où lsb est le sigle de l'expression anglo-saxonne "least significant bit", 1 lsb étant la plus petite variation de tension pouvant être discrétisée sur un conducteur colonne. Statistiquement, le bruit d'un pixel dans une image test suit une loi normale de variance 2.s². Pour un bloc correspondant à une zone non exposée du dispositif photosensible, la moyenne des pixels du bloc suit une loi normale de moyenne zéro et de variance 2.s²/(nₗ.m). La figure 8 illustre, par un graphique, un exemple de probabilité d'occurrence des moyennes MΔVⱼ d'un bloc correspondant à une zone non exposée. Dans cet exemple, on considère un bruit électronique d'écart-type s égal à 8,2 lsb, une dimension m égale à 50 et un nombre nₗ de lignes égal à 3. Ainsi, un bloc de dimensions 3 x 50 correspondant à une zone non exposée a une chance sur 10000 d'avoir une moyenne MΔVⱼ égale à 4. A partir de ce graphique, il est possible de déterminer un seuil de détection Sₘ en fonction du taux de fausse alarme souhaité. Les hypothèses suivantes sont considérées à titre d'exemple. Un test, c'est-à-dire la détermination d'une série de potentiels V_{i,j}, est effectué toutes les 100 millisecondes (ms). L'objectif est d'obtenir une seule fausse alarme en 10 ans de fonctionnement. Sur ces 10 ans, le nombre de tests est égal à (10 x 365 x 24 x 60 x 60 x 10 =) 3,2 x 10⁹. Le taux de fausse alarme doit donc être égal à 3,2 x 10⁻¹⁰. Le graphique permet de déterminer un seuil de détection Sₘ égal à 6,4. Un bloc dont la moyenne MΔVⱼ est supérieure à 6,4 est donc considéré comme correspondant à une zone exposée avec un taux de fausse alarme égal à 3,2 x 10⁻¹⁰.

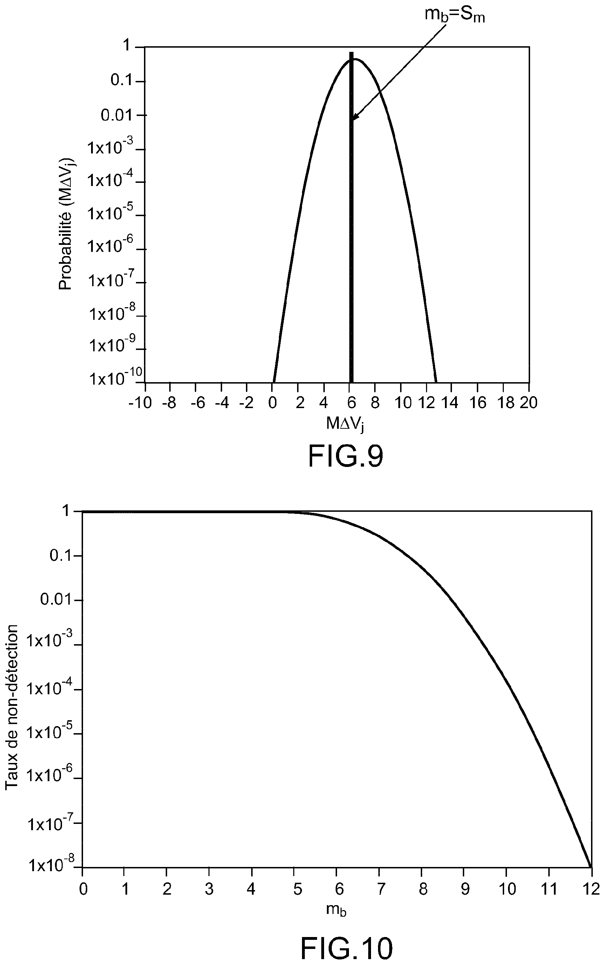

On considère à présent un bloc correspondant à une zone exposée du dispositif photosensible. Ce bloc subit la même loi statistique qu'un bloc correspondant à une zone non exposée, mais avec une moyenne statistique m_{b} qui dépend du flux de photons reçu. La figure 9 illustre, par un graphique, un exemple de probabilité d'occurrence des moyennes MΔVⱼ d'un bloc correspondant à une zone exposée avec une moyenne statistique m_{b} égale au seuil de détection Sₘ. Comme illustré par la figure 9, il y a autant de chances que la moyenne MΔVⱼ soit inférieure au seuil de détection Sₘ que supérieure à ce seuil.

La figure 10 représente, par un graphique, un exemple de taux de non-détection en fonction de la moyenne m_{b} d'un bloc. Le graphique permet de déterminer que, pour une exposition donnant une moyenne m_{b} égale à 8 lsb, la probabilité de détection est égale à 95%. Cela signifie que sur 100 blocs testés avec une moyenne de 8 lsb, 5 blocs ne seraient pas détectés. Un tel taux de non-détection n'est pas toujours acceptable, notamment lorsqu'un patient est soumis à un rayonnement X. Les hypothèses suivantes sont considérées à titre d'exemple. Une exposition a lieu toutes les 20 minutes. La dimension m des blocs est égale à 50 et le nombre n_{c} de conducteurs colonne est égal à 2880. On considère toujours un bruit électronique d'écart-type s égal à 8,2 lsb. L'objectif est de ne manquer qu'une exposition tous les 10 ans. Le taux de non-détection voulu est donc de (1/(10x365x24x60x(1/20)x(2880/50) =) 6,6 x 10⁻⁸. La moyenne MΔVⱼ du bloc correspondant est par exemple égale à 11,5 lsb. En résumé, un bloc dont la moyenne MΔVⱼ est égale à 11,5 lsb est considéré comme correspondant à une zone exposée avec un taux de non-détection égal à 6,6 x 10⁻⁸. Ainsi, le dispositif photosensible doit être au minimum exposé à un flux tel que la moyenne MΔVⱼ d'un bloc soit égale à 11,5 lsb pour que le dispositif photosensible soit considéré comme ayant été exposé à un rayonnement avec un taux de non-détection égal à 6,6 x 10⁻⁸. Cette moyenne minimale détectable est notée M_{d}. La moyenne minimale détectable M_{d} est fonction de la dimension m des blocs.

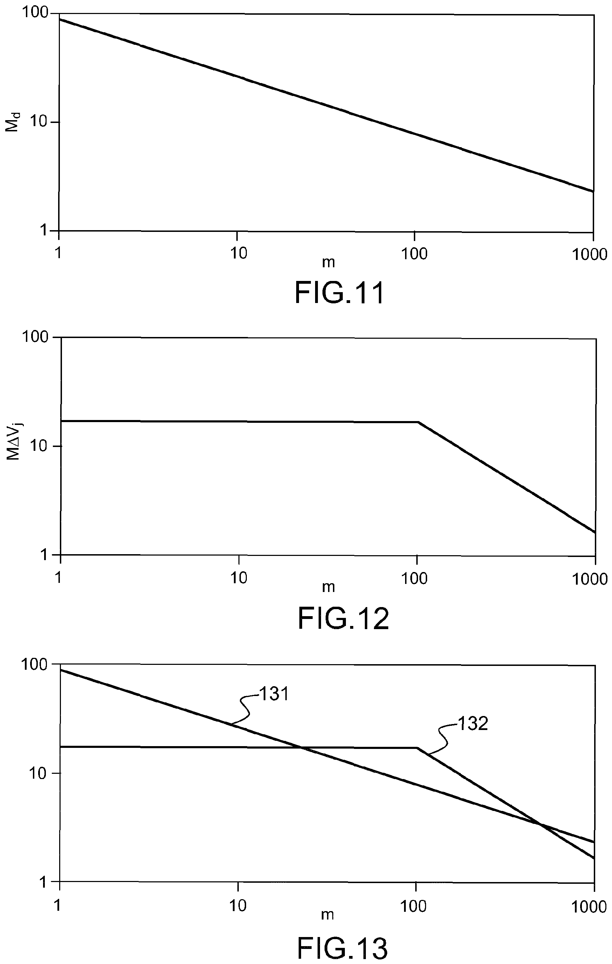

La figure 11 illustre, par un graphique, la relation entre la dimension m d'un bloc et la moyenne minimale détectable M_{d}. Ce graphique montre que plus les blocs sont larges, plus la moyenne minimale détectable M_{d} est faible.

Par ailleurs, un dispositif photosensible n'est pas forcément exposé sur toute la surface de sa matrice. Ainsi, pour une exposition donnée, seuls certains des conducteurs colonne peuvent être reliés à des points photosensibles ayant reçu un rayonnement. La dimension m des blocs doit donc également tenir compte des zones exposées de la matrice. A titre d'exemple, on considère une exposition sur une surface de 100 x 100 points photosensibles. Dans un souci de simplification, les blocs sont toujours considérés comme étant centrés sur cette surface. La figure 12 illustre, par un graphique, la relation entre la dimension m d'un bloc, et la moyenne MΔVⱼ d'un bloc correspondant à une telle exposition. Si la dimension m du bloc centré sur la zone exposée est inférieure ou égale à la largeur de la surface exposée, la moyenne MΔVⱼ de ce bloc reste constante. En revanche, si la dimension m du bloc devient supérieure à la largeur de la surface exposée, la moyenne MΔVⱼ du bloc diminue.

La figure 13 regroupe les deux graphiques des figures 11 et 12 dans un seul graphique. Une première courbe 131 représente la moyenne minimale détectable M_{d} Une deuxième courbe 132 représente la moyenne MΔVⱼ. Les courbes 131 et 132 font apparaître que, pour une exposition sur une largeur de 100 colonnes avec une moyenne m_{b} environ égale à 17 lsb, un bloc centré sur la zone d'exposition est détecté comme correspondant à une zone d'exposition avec un taux de non-détection de 6,6 x 10⁻⁸ si et seulement si sa dimension m est comprise entre 25 et 450. Par ailleurs, il apparaît un optimum de détection pour une dimension m égale à la largeur de l'exposition. Cependant, cette largeur d'exposition n'est généralement pas connue. Or, dans certains domaines d'imagerie, la surface exposée peut énormément varier entre les différentes expositions. Par conséquent, une unique dimension m ne permet pas au dispositif photosensible de détecter des expositions de n'importe quelle largeur. L'étape de test 54 de l'exposition des points photosensibles permet donc au dispositif photosensible d'adapter la dimension m des blocs à la largeur effective de l'exposition.

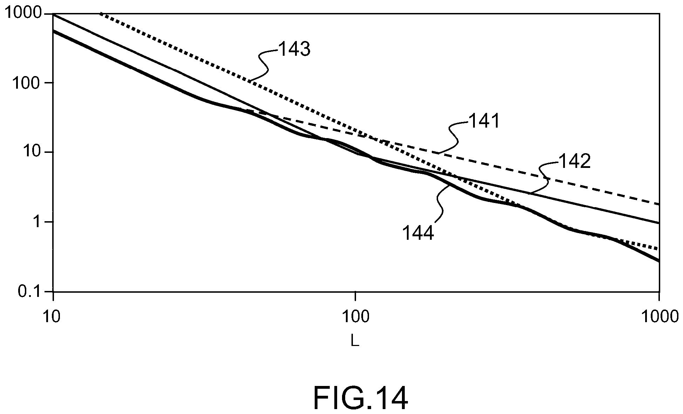

La figure 14 illustre l'effet de la variation de la dimension m des blocs sur la détection d'une exposition. Elle représente, par un graphique, la moyenne minimale détectable M_{d} en fonction de la largeur L de la zone exposée pour différentes dimensions m de blocs. Une première courbe 141 représente la moyenne minimale détectable M_{d} pour une dimension m égale à 30. Une deuxième courbe 142 représente la moyenne minimale détectable M_{d} pour une dimension m égale à 100. Une troisième courbe 143 représente la moyenne minimale détectable M_{d} pour une dimension m égale à 500. Enfin, une quatrième courbe 144 représente la moyenne minimale détectable M_{d} pour une dimension m prenant successivement les valeurs 32, 64, 128, 256, 512 et 1024. Les courbes 141 à 144 montrent que la variation de la dimension m des blocs permet une détection optimale quelle que soit la largeur de la zone exposée.

La capacité de couplage parasite des transistors d'une matrice de points photosensibles peut être utilisée de manière analogue dans le but de mesurer la quantité de photons ou de rayons X reçue par le dispositif photosensible. En effet, la variation de potentiel des points flottants, et donc des conducteurs colonne, est proportionnelle à la quantité de photons ou de rayons X reçue. En réalisant plusieurs tests de détermination du potentiel sur les conducteurs colonne pendant la phase d'acquisition, il est possible d'en déduire la quantité de photons ou de rayons X reçue. Cette fonction de quantification du rayonnement peut notamment être utilisée pour asservir la puissance d'émission du flux de photons ou de rayons X, ou pour interrompre l'émission une fois que la quantité désirée de photons ou de rayons X a été reçue.

## Revendications

1. Procédé de commande d'un dispositif photosensible (10), susceptible d'être exposé à un flux de photons, issu d'une source de photons ou de rayons X, pendant une durée d'émission limitée (dx), comprenant un conducteur colonne (Y₁-Y₃), des conducteurs ligne (X₁-X₃) et des points photosensibles (Pₚ), chaque point photosensible (Pₚ) étant relié entre le conducteur colonne (Y₁-Y₃) et l'un des conducteurs ligne (X₁-X₃), et comprenant un élément photosensible (Dp) apte à convertir un flux de photons en charges électriques, et un transistor (T) commandé par le conducteur ligne (X₁-X₃) correspondant, les transistors (T) étant commandés à l'état bloqué pendant une phase d'acquisition où le flux de photons est converti en charges électriques, et étant successivement commandés à l'état passant pendant une phase de lecture de manière à transférer ligne par ligne les charges électriques vers le conducteur colonne (Y₁-Y₃), chaque transistor (T) introduisant à l'état bloqué une capacité de couplage parasite (C) entre l'élément photosensible (Pₚ) et le conducteur colonne (Y₁-Y₃) correspondants,
le procédé comportant les étapes suivantes :
▪ déterminer (21, 22) le potentiel électrique sur le conducteur colonne (Y₁-Y₃) à un premier et un deuxième instants (tₙ),
▪ déterminer (23) une différence du potentiel électrique sur le conducteur colonne (Y₁-Y₃) entre les premier et deuxième instants,
▪ comparer (24) la différence de potentiel électrique à un seuil prédéterminé, l'étape (21, 22) consistant à déterminer le potentiel électrique sur le conducteur colonne (Y₁-Y₃) étant répétée périodiquement tant que la différence de potentiel entre les deux derniers instants de détermination n'est pas supérieure au seuil prédéterminé, les transistors (T) sont commandés à l'état bloqué au premier instant et au deuxième instant,
▪ si la différence de potentiel électrique est supérieure au seuil prédéterminé, commander (25) successivement les transistors (T) de manière à transférer individuellement les charges électriques de chaque point photosensible (Pₚ) vers le conducteur colonne (Y₁-Y₃), de façon à déclencher la lecture des charges électriques en cas d'évolution significative du potentiel électrique, l'étape (25) de commande des transistors (T) est précédée d'une étape d'attente (413), une durée de l'étape d'attente (413) étant supérieure à une durée (dₓ) maximale pendant laquelle le dispositif photosensible (10) est susceptible d'être exposé à un flux de photons, et la durée (Tᵥ) de la période entre deux déterminations successives du potentiel sur un conducteur colonne est inférieure à une durée (dₓ) minimale pendant laquelle le dispositif photosensible (10) est susceptible d'être exposé à un flux de photons.

2. Procédé selon la revendication 1, dans lequel le seuil est déterminé de manière à éviter l'exécution de l'étape (25) de commande des transistors (T) en l'absence d'exposition des éléments photosensibles (Pₚ) à un flux de photons, et de manière à éviter la non-exécution de l'étape (25) de commande des transistors (T) après une exposition effective des éléments photosensibles (Pₚ).

3. Procédé selon l'une des revendications 1 à 2, dans lequel le potentiel électrique sur le conducteur colonne (Y₁-Y₃) est déterminé plusieurs fois successivement pour une même étape (21, 22) de détermination du potentiel, les différents potentiels étant moyennés avant de déterminer leur différence avec un autre potentiel afin de réduire le bruit associé à la détermination du potentiel.

4. Procédé selon l'une des revendications 1 à 3, dans lequel le dispositif photosensible (10) comprend plusieurs conducteurs colonne (Y₁-Y₃), chaque point photosensible (Pₚ) étant relié entre l'un des conducteurs colonne (Y₁-Y₃) et l'un des conducteurs ligne (X₁-X₃) de manière à former une matrice (11) de points photosensibles (Pₚ), le potentiel électrique étant déterminé dans chaque étape correspondante (21, 22) sur plusieurs conducteurs colonne (Y₁-Y₃), l'étape (23) de détermination de la différence de potentiel étant exécutée pour chacun desdits conducteurs colonne (Y₁-Y₃), et l'étape (24) de comparaison de la différence de potentiel avec le seuil prédéterminé tenant compte de l'ensemble des différences de potentiel.

5. Procédé selon la revendication 4, dans lequel l'étape (24) de comparaison des différences de potentiel comprend la comparaison individuelle de chaque différence de potentiel avec le seuil prédéterminé, l'étape (25) de commande des transistors (T) n'étant exécutée que si le nombre de comparaisons positives est supérieur à un nombre prédéterminé.

6. Procédé selon la revendication 1, comprenant la étape supplémentaire suivante
▪ déterminer la quantité de photons reçue par le dispositif photosensible (10) en fonction de la différence de potentiel.

7. Procédé selon la revendication 1, dans lequel le dispositif photosensible (10) comprend n_{c} conducteurs colonne (Y₁-Y₃), chaque point photosensible (Pₚ) étant relié entre l'un des conducteurs colonne (Y₁-Y₃) et l'un des conducteurs ligne (X₁-X₃) de manière à former une matrice (11) de points photosensibles (Pₚ), le potentiel électrique étant déterminé (51) nₗ fois successivement sur chacun des conducteurs colonne (Y₁-Y₃) dans un premier intervalle de temps où les transistors (T) sont commandés à l'état bloqué, les potentiels formant une première suite de potentiels pour chaque conducteur colonne, le procédé comportant les étapes supplémentaires suivantes :
▪ déterminer (52) le potentiel électrique nₗ fois successivement sur chacun des conducteurs colonne (Y₁-Y₃) dans un deuxième intervalle de temps où les transistors (T) sont commandés à l'état bloqué, les potentiels formant une deuxième suite de potentiels pour chaque conducteur colonne,
▪ déterminer (53), relativement à chaque conducteur colonne et à chaque occurrence dans les suites de potentiels, une différence de potentiel entre le potentiel électrique de la première suite et le potentiel électrique correspondant de la deuxième suite, les différences de potentiel formant une image test de n_{c} colonnes par nₗ lignes de pixels,
▪ tester (54) l'exposition des points photosensibles, ladite étape comprenant les sous-étapes successives suivantes :
- découper (542) l'image test en blocs (611-617) de m colonnes par nₗ lignes de pixels,
- déterminer (543), pour chaque bloc (611-617), une moyenne des différences de potentiel,
- comparer (544) chaque moyenne à un seuil prédéterminé fonction de la dimension m des blocs,
▪ si aucune moyenne n'est supérieure au seuil prédéterminé, répéter l'étape de test (54) avec une dimension m de bloc supérieure à la dimension m précédente,
▪ si au moins une moyenne est supérieure au seuil prédéterminé, commander (55) successivement les transistors (T) de manière à transférer individuellement les charges électriques de chaque point photosensible (Pₚ) vers le conducteur colonne (Y₁-Y₃) correspondant.

8. Procédé selon la revendication 7, dans lequel la dimension m des blocs (611-617) est déterminée de manière à ce que l'image test soit découpée une première fois en 2ⁿ blocs, avec n un entier supérieur ou égal à 1, la dimension m des blocs étant augmentée à chaque répétition de l'étape de test en diminuant la valeur de n d'une unité.

## Patentansprüche

1. Verfahren zur Steuerung einer lichtempfindlichen Vorrichtung (10), welche einem Photonenfluss gegenüber exponiert werden kann, welcher aus einer Photonen- oder Röntgenstrahlenquelle stammt, während einer begrenzten Emissionsdauer (dx), beinhaltend einen Spaltenleiter (Y₁-Y₃), Zeilenleiter (X₁-X₃) und lichtempfindliche Punkte (Pₚ), wobei jeder lichtempfindliche Punkt (Pₚ) zwischen dem Spaltenleiter (Y₁-Y₃) und einem der Zeilenleiter (X₁-X₃) verbunden ist, und ein lichtempfindliches Element (Dₚ) beinhaltet, welches in der Lage ist, einen Photonenfluss in elektrische Ladungen umzuwandeln, und einen Transistor (T), welcher durch den entsprechenden Zeilenleiter (X₁-X₃) gesteuert wird, wobei die Transistoren (T) im gesperrten Zustand während einer Erfassungsphase angesteuert werden, während welcher der Photonenfluss in elektrische Ladungen umgewandelt wird, und nacheinander im durchlässigen Zustand angesteuert werden während einer Auslesephase, um Zeile für Zeile elektrische Leitungen an den Spaltenleiter (Y₁-Y₃) zu übertragen, wobei jeder Transistor (T) im gesperrten Zustand eine Stör-Kopplungskapazität (C) zwischen das entsprechende lichtempfindliche Element (Pₚ) und den entsprechenden Spaltenleiter (Y₁-Y₃) einbringt,
wobei das Verfahren folgende Schritte beinhaltet:
• Bestimmen (21, 22) des elektrischen Potenzials am Spaltenleiter (Y₁-Y₃) zu einem ersten und einem zweiten Zeitpunkt (tₙ),
• Bestimmen (23) der Differenz des elektrischen Potenzials am Spaltenleiter (Y₁-Y₃) zwischen dem ersten und dem zweiten Zeitpunkt,
• Vergleichen (24) der Differenz des elektrischen Potenzials mit einem vorbestimmten Schwellenwert, wobei Schritt (21, 22), welcher im Bestimmen des elektrischen Potenzials am Spaltenleiter (Y₁-Y₃) besteht, regelmäßig wiederholt wird, so lange die Potenzialdifferenz zwischen den beiden letzten Bestimmungszeitpunkten den vorbestimmten Schwellenwert nicht überschreitet,
wobei die Transistoren (T) im ersten und im zweiten Zeitpunkt im gesperrten Zustand angesteuert werden,
• wenn die Differenz des elektrischen Potenzials den vorbestimmten Schwellenwert überschreitet, Ansteuern (25) der Transistoren (T) nacheinander in der Weise, dass die elektrischen Lasten eines jeden lichtempfindlichen Punktes (Pₚ) individuell an den Spaltenleiter (Y₁-Y₃) übertragen werden, so dass das Auslesen der elektrischen Ladungen bei signifikanter Entwicklung des elektrischen Potenzials ausgelöst wird,
wobei dem Schritt (25) des Ansteuerns der Transistoren (T) ein Schritt des Wartens (413) vorausgeht, wobei eine Dauer des Warteschrittes (413) eine maximale Dauer (dx) überschreitet, während welcher die lichtempfindliche Vorrichtung (10) einem Photonenfluss gegenüber exponiert werden kann,
und wobei die Dauer (Tᵥ) des Zeitraums zwischen zwei aufeinander folgenden Bestimmungen des Potenzials an einem Spaltenleiter eine Mindestdauer (dₓ) unterschreitet, während welcher die lichtempfindliche Vorrichtung (10) einem Photonenfluss gegenüber exponiert werden kann.

2. Verfahren nach Anspruch 1, bei welchem der Schwellenwert so bestimmt wird, dass die Ausführung des Schrittes (25) des Ansteuerns der Transistoren (T) in Ermangelung der Exposition der lichtempfindlichen Elemente (Pₚ) gegenüber einem Photonenfluss vermieden wird, und so, dass die Nichtausführung des Schrittes (25) des Ansteuerns der Transistoren (T) nach einer effektiven Exposition der lichtempfindlichen Elemente (Pₚ) vermieden wird.

3. Verfahren nach einem der Ansprüche 1 bis 2, bei welchem das elektrische Potenzial am Spaltenleiter (Y₁-Y₃) mehrfach nacheinander bei einem selben Schritt (21, 22) des Bestimmens des Potenzials bestimmt wird, wobei die verschiedene Potenziale gemittelt werden, bevor ihre Differenz mit einem anderen Potenzial bestimmt wird, um das mit der Bestimmung des Potenzials verbundene Rauschen zu reduzieren.

4. Verfahren nach einem der Ansprüche 1 bis 3, bei welchem die lichtempfindlich Vorrichtung (10) mehrere Spaltenleiter (Y₁-Y₃) beinhaltet, wobei jeder lichtempfindliche Punkt (Pₚ) zwischen einem der Spaltenleiter (Y₁-Y₃) und einem der Zeilenleiter (X₁-X₃) so verbunden ist, dass eine Matrix (11) aus lichtempfindlichen Punkten (Pₚ) gebildet wird, wobei das elektrische Potenzial in jedem entsprechenden Schritt (21, 22) an mehreren Spaltenleitern (Y₁-Y₃) bestimmt wird, wobei der Schritt (23) des Bestimmens der Potenzialdifferenz für jeden der Spaltenleiter (Y₁-Y₃) ausgeführt wird, und der Schritt (24) des Vergleichens der Potenzialdifferenz mit dem vorbestimmten Schwellenwert sämtliche Potenzialdifferenzen berücksichtigt.

5. Verfahren nach Anspruch 4, bei welchem der Schritt (24) des Vergleichens der Potenzialdifferenzen den individuellen Vergleich einer jeden Potenzialdifferenz mit dem vorbestimmten Schwellenwert beinhaltet, wobei der Schritt (25) des Ansteuerns der Transistoren (T) nur ausgeführt wird, wenn die Anzahl der positiven Vergleiche eine vorbestimmte Anzahl überschreitet.

6. Verfahren nach Anspruch 1, welches den folgenden zusätzlichen Schritt beinhaltet:
• Bestimmen der Menge an durch die lichtempfindliche Vorrichtung (10) empfangenen Photonen anhand der Potenzialdifferenz.

7. Verfahren nach Anspruch 1, bei welchem die lichtempfindliche Vorrichtung (10) n_{c} Spaltenleiter (Y₁-Y₃) beinhaltet, wobei jeder lichtempfindliche Punkt (Pₚ) zwischen einem der Spaltenleiter (Y₁-Y₃) und einem der Zeilenleiter (X₁-X₃) so verbunden ist, dass eine Matrix (11) aus lichtempfindlichen Punkten (Pₚ) gebildet wird, wobei das elektrische Potenzial (51) nₗ Mal nacheinander an jedem der Spaltenleiter (Y₁-Y₃) in einem ersten Zeitintervall bestimmt wird, in welchem die Transistoren (T) im gesperrten Zustand angesteuert sind, wobei die Potenziale eine erste Folge von Potenzialen für jeden Spaltenleiter bilden,
wobei das Verfahren folgende zusätzliche Schritte beinhaltet:
• Bestimmen (52) des elektrischen Potenzials nₗ Mal nacheinander an jedem der Spaltenleiter (Y₁-Y₃) in einem zweiten Zeitintervall, in welchem die Transistoren (T) im gesperrten Zustand angesteuert sind, wobei die Potenziale eine zweite Folge von Potenzialen für jeden Spaltenleiter bilden,
• Bestimmen (53), in Bezug auf jeden Spaltenleiter und auf jedes Eintreten in den Potenzialfolgen, einer Potenzialdifferenz zwischen dem elektrischen Potenzial der ersten Folge und dem entsprechenden Potenzial der zweiten Folge, wobei die Potenzialdifferenzen ein Testbild von n_{c} Pixel-Spalten mal nₗ Pixel-Zeilen bilden,
• Testen (54) der Exposition der lichtempfindlichen Punkte, wobei der Schritt folgende aufeinander folgende Unterschritte beinhaltet:
- Zerschneiden (542) des Testbildes in Blöcke (611-617) zu m Pixel-Spalten mal nₗ Pixel-Zeilen,
- Bestimmen (543), für jeden Block (611-617), eines Mittelwertes der Potenzialdifferenzen,
- Vergleichen (544) eines jeden Mittelwertes mit einem anhand der Abmessung m der Blöcke vorbestimmten Schwellenwert,
• wenn kein Mittelwert den vorbestimmten Schwellenwert überschreitet, Wiederholen des Test-Schrittes (54) mit einer Block-Abmessung m, welche größer ist als die vorherige Abmessung,
• wenn mindestens ein Mittelwert den vorbestimmten Schwellenwert überschreitet, Ansteuern (55) der Transistoren (T) nacheinander in der Weise, dass die elektrischen Lasten eines jeden lichtempfindlichen Punktes (Pₚ) individuell an den entsprechenden Spaltenleiter (Y₁-Y₃) übertragen wird.

8. Verfahren nach Anspruch 7, bei welchem die Abmessung m der Blöcke (611-617) so bestimmt wird, dass das Testbild ein erstes Mal in 2ⁿ Blöcke zerschnitten wird, wobei n eine Ganzzahl größer oder gleich 1 ist, und die Abmessung m der Blöcke bei jeder Wiederholung des Testschritts erhöht wird, indem der Wert n um eine Einheit verringert wird.

## Claims

1. A method for controlling a photosensitive device (10), suitable to be exposed to a photon stream coming from a source of photons or of X-rays during a limited emission time (dx), comprising a column conductor (Y₁-Y₃), row conductors (X₁-X₃) and photosensitive points (Pₚ), each photosensitive point (Pₚ) being linked between the column conductor (Y₁-Y₃) and one of the row conductors (X₁-X₃), and comprising a photosensitive element (Dₚ) suitable for converting a photon stream into electrical charges, and a transistor (T) controlled by the corresponding row conductor (X₁-X₃), the transistors (T) being controlled in the off state during an acquisition phase in which the photon stream is converted into electrical charges, and being successively controlled in the on state during a reading phase so as to transfer, row by row, the electrical charges to the column conductor (Y₁-Y₃), each transistor (T) introducing, in the off state, a stray coupling capacitance (C) between the corresponding photosensitive element (Pₚ) and column conductor (Y₁-Y₃),
the method comprising the following steps:
▪ determining (21, 22) the electrical potential on the column conductor (Y₁-Y₃) at a first and a second instant (tₙ),
▪ determining (23) a difference in the electrical potential on the column conductor (Y₁-Y₃) between the first and second instants,
▪ comparing (24) the electrical potential difference with a predetermined threshold, step (21, 22) consisting in determining the electrical potential on the column conductor (Y₁-Y₃) being repeated periodically as long as the potential difference between the last two determination instants is not greater than the predetermined threshold,
the transistors (T) being controlled in the off state at the first and the second instant,
▪ if the electrical potential difference is greater than the predetermined threshold, successively controlling (25) the transistors (T) so as to individually transfer the electrical charges of each photosensitive point (Pₚ) to the column conductor (Y₁-Y₃) so as to initiate the reading of the electrical charges in the event of a significant evolution of the electrical potential,
the step (25) of controlling the transistors (T) is preceded by a waiting step (413), a duration of the waiting step (413) being greater than a maximum duration (dₓ) during which the photosensitive device (10) is likely to be exposed to a photon stream,
the duration (Tᵥ) of the period between two successive determinations of the potential on a column conductor is less than a minimum duration (dₓ) during which the photosensitive device (10) is likely to be exposed to a photon stream.

2. The method according to claim 1, in which the threshold is determined in such a way as to avoid the execution of the step (25) of controlling the transistors (T) in the absence of exposure of the photosensitive elements (Pₚ) to a photon stream, and in such a way as to avoid the non-execution of the step (25) of controlling the transistors (T) after an effective exposure of the photosensitive elements (Pₚ).

3. The method according to one of claims 1 to 2, in which the electrical potential on the column conductor (Y₁-Y₃) is determined a number of times in succession for one and the same step (21, 22) of determining the potential, the different potentials being averaged before determining their difference with another potential in order to reduce the noise associated with the determination of the potential.

4. The method according to one of claims 1 to 3, in which the photosensitive device (10) comprises a number of column conductors (Y₁-Y₃), each photosensitive point (Pₚ) being linked between one of the column conductors (Y₁-Y₃) and one of the row conductors (X₁-X₃) so as to form a matrix (11) of photosensitive points (Pₚ), the electrical potential being determined in each corresponding step (21, 22) on a number of column conductors (Y₁-Y₃), the step (23) of determining the potential difference being executed for each of said column conductors (Y₁-Y₃), and the step (24) of comparing the potential difference with the predetermined threshold taking into account all of the potential differences.

5. The method according to claim 4, in which the step (24) of comparing the potential differences comprises the individual comparison of each potential difference with the predetermined threshold, the step (25) of controlling the transistors (T) being executed only if the number of positive comparisons is greater than a predetermined number.

6. The method according to claim 1, comprising the following additional step:
▪ determining the quantity of photons received by the photosensitive device (10) as a function of the potential difference.

7. The method according to claim 1, in which the photosensitive device (10) comprises n_{c} column conductors (Y₁-Y₃), each photosensitive point (Pₚ) being linked between one of the column conductors (Y₁-Y₃) and one of the row conductors (X₁-X₃) so as to form a matrix (11) of photosensitive points (Pₚ), the electrical potential being determined (51) nₗ times in succession on each of the column conductors (Y₁-Y₃) in a first time interval when the transistors (T) are controlled in the off state, the potentials forming a first series of potentials for each column conductor,
the method comprising the following additional steps:
▪ determining (52) the electrical potential nₗ times in succession on each of the column conductors (Y₁-Y₃) in a second time interval when the transistors (T) are controlled in the off state, the potentials forming a second series of potentials for each column conductor,
▪ determining (53), in relation to each column conductor and to each occurrence in the series of potentials, a potential difference between the electrical potential of the first series and the corresponding electrical potential of the second series, the potential differences forming a test image of n_{c} columns by nₗ rows of pixels,
▪ testing (54) the exposure of the photosensitive points, said step comprising the following successive substeps:
- subdividing (542) the test image into blocks (611-617) of m columns by nₗ rows of pixels,
- determining (543), for each block (611-617), an average of the potential differences,
- comparing (544) each average with a predetermined threshold that is a function of the dimension m of the blocks,
▪ if no average is greater than the predetermined threshold, repeating the test step (54) with a block dimension m greater than the preceding dimension m,
▪ if at least one average is greater than the predetermined threshold, successively controlling (55) the transistors (T) so as to individually transfer the electrical charges of each photosensitive point (Pₚ) to the corresponding column conductor (Y₁-Y₃).

8. The method according to claim 7, in which the dimension m of the blocks (611-617) is determined in such a way that the test image is subdivided a first time into 2ⁿ blocks, with n being an integer greater than or equal to 1, the dimension m of the blocks being increased on each repetition of the test step by reducing the value of n by one unit.
